# EUROPEAN PATENT SPECIFICATION

(11) **EP 2 827 719 B1**
(45) Date of publication and mention of the grant of the patent: **30.03.2016**
(21) Application number: 13707214.6
(22) Date of filing: 22.01.2013
(51) Int. Cl.: A23D 7/005, A23D 7/02, A23D 7/00

(54) **RHEOLOGICALLY-CONTROLLED VEGETABLE SPREAD OILS**
RHEOLOGISCH GESTEUERTE PFLANZENAUFSTRICHÖLE
HUILES VÉGÉTALES À TARTINER CONTRÔLÉES DE MANIÈRE RHÉOLOGIQUE

(30) Priority: 23.01.2012 IT RM20120024
(43) Date of publication of application: 28.01.2015
(73) Proprietor: Universita' Della Calabria, 87036 Arcavacata di Rende (IT); R&DCAL Srl, 87036 Arcavacata di Rende (CS) (IT); De Cindio, Bruno, 87036 Arcavacata di Rende (CS) (IT); Lupi, Francesca Romana, 87036 Arcavacata di Rende (CS) (IT); Gabriele, Domenico, 87036 Arcavacata di Rende (CS) (IT); Baldino, Noemi, 87036 Arcavacata di Rende (CS) (IT); Petramale, Mario, 87043 Bisignano (CS) (IT)
(72) Inventor: DE CINDIO, Bruno, I-87036 Arcavacata di Rende (CS) (IT); LUPI, Francesca Romana, I-87036 Arcavacata di Rende (CS) (IT); GABRIELE, Domenico, I-87036 Arcavacata di Rende (CS) (IT); BALDINO, Noemi, I-87036 Arcavacata di Rende (CS) (IT); PETRAMALE, Mario, I-87043 Bisignano (CS) (IT)
(74) Representative: Di Giovine, Paolo
(86) International application number: PCT/IB2013/050558
(87) International publication number: WO 2013/111058

(56) References cited:
- WO-A2-01/80659
- GB-A- 2 281 304
- US-A- 5 248 509
- US-A1- 2007 148 313
- US-B1- 6 322 842

## Description

### Technical Field

The present invention deals with the production of vegetable spread oils (water-in-oil emulsions) as new materials for substituting shortenings or margarines, for which the mechanical characteristics are traditionally adjusted thanks to catalytic hydrogenation processes. These processes, strongly used in the past few years by food industries for hard fats production, leads to the formation of by-products dangerous for consumers' health, such as trans fatty acids [Marangoni, 2009].

This invention deals with the production of hard fats (water-in-oil emulsions) by using alternative recipe and process under nitrogen atmosphere in order to enhance both the structuration and the consistency of the fat phase (mainly constituted by oils liquid at room temperature) without using any chemical rearrangement of the liquid oils and avoiding rancidity phenomena. The new fats can be suitably used for different applications of the food industry, such as for producing baked goods, pastries, dough and all foodstuffs involving butter or margarine in the recipe. The spread oil should have rheological properties of spreadability and smoothness, if used in its current form, without any further modification or cooking processes; moreover, it should have rheological properties similar to the dough for ensuring a good rheological matching in the case of baked goods production [Harte, 2003]. Finally, it should be stable enough with temperature to guarantee adequate melting properties when cooked.

### Background Art

The production of hard fat phases, mainly commercialized as emulsions (biphasic systems of two immiscible liquids dispersed one in the other in form of droplets) has been investigated by different authors of scientific papers [Lupi et al., 2012 ab, Ojijo et al., 2004, Shapiro, 2011] and patents [Kakuda et al., 2000, Rasmussen, 1993, Reddy et al., 2001, Maguire, 1995, Bruin, 1993]. In fact, structured emulsions are used in different food applications such as dairy emulsion, mousse, margarine, spreadable fats and so on. The desired texture of the emulsion, can be reached usually by structuring the water phase with hydrophilic gelling agents [Gabriele et al., 2009; Rodríguez-Abreu and Lazzari, 2008], structuring the oil phase by fat crystallisation [Coupland, 2002; Pernetti et al. 2007], or by concentrating the dispersed phase up to volume fractions much higher than the limit value ϕ*, that is the maximum packing fraction of an equivalent suspension of hard spheres [Leal-Calderon et al., 2007; Pal, 1998]. In the present invention, the increase in consistency and structuration of the spreadable emulsion (Spread oil) is achieved by the organogelation of vegetable oil phases.

Organogelation is the promotion of a tridimensional network formation in an oil phase, thanks to the action of Low Molecular Weight Organogelators (LMWOs) which start to interact among them after a crystallisation at a certain temperature value (Tco, onset of crystallisation temperature) [Lupi et al. 2012a,b]. Organogelation can be obtained also with polymeric molecules thanks to interchain interactions [Zetzl et al., 2012].

Different patents were proposed in order to structure water in oil emulsion for food uses. Kakuda, Abraham and Jahan-aval (WO0180659), proposed a patent where different high liquid oil emulsions for substituting traditional unhealthy shortening or margarines were described. The main difference between their patent and the present one is that the emulsions proposed by the authors are O/W/O, prepared mixing together two O/W emulsions wherein first oil-in-water emulsion may comprise about 55-80% of the total liquid oil and second oil-in-water emulsion my comprise about 20-45% of the total liquid oil and an added hard fat. Emulsions proposed in the present paten are water-in-oil, where oil is gelled.

Rasmussen (WO9310665) proposed a patent where water-in-oil emulsions were produced by mixing together a solid fat with an aqueous component, such as skim milk or water at a temperature at which the major portion of the fatty substance is in a crystalline state. The authors patented the process and the apparatus to produce such emulsions. The water in oil emulsions patented by the authors have a water content exceeding 30%, in order to reduce the fat content in the considered food. Reddy, Madsen and Schuurman (US6322842) patented a fat continuous stick having up to 80% of a fat containing less than 10% of trans fatty acids. The product has to be prepared by mixing the fat and aqueous phase into a crystallization unit between two scraped surfaces. The process comprises mixing a water phase and an oil phase containing an interesterified hardstock, that is an added hard fat for which the consistency is improved by a chemical modification of the fatty acid chains, in a scraped surface heat exchanger. Also Maguire (US5248509) patented the invention of an edible fat blend relatively high in cis monounsaturated fatty acids, made by a mixture of vegetable oils and the addition of a hardstock (from 10% to 60% by weight) for providing structure to the blend from which it should be possible to produce water-in-oil emulsions. Finally, Bruin (IES62577) patented the invention of edible fatcontaining products comprising indigestible polyol fatty acids polyesters, having the characteristic of being suitable to be used as low-calories fat-replacers in edible product and giving the hardness and structure to oils if added as hardstocks.

Considering the innovation given by the above cited references, the present invention proposes the production of new water-in-oil emulsions characterized by the same consistency and structuration of margarines and butter, but prepared with a safe, healthy and innovative process and ingredients composition.

The water-in-oil emulsions are produced with a very high amount of vegetable oils (from 71% to 84% by weight), a small amount of added hard fats (hardstocks), which, in the present invention, are not used as hardeners of the liquid oil, but just to control the rheological properties of the final system (from 2 to 9% by weight of natural hardstocks, i.e. cocoa butter), and a very little amount of molecules (typically from 2-5% by weight), the so-called Low Molecular Weight Organogelators, which are the real responsible of the solid-like structure able to guarantee the desired consistency and structuration of the final emulsion and, finally a certain amount of an aqueous phase (12-15%). Among the different natural hardstocks that could be chosen as rheologicalcontrollers of the fat blend, according to literature, cocoa butter is recommended. In fact, its composition is characterized by a high content of stearic acid [Salas et al., 2011], which shows a neutral effect on consumers' cholesterol levels [Marangoni, 2009].

Gelling molecules are normally Low Molecular Weight Organogelators (LMWOs), and they show an amphiphilic structure, thanks to which they are currently used mostly as emulsifiers by food industries.

Emulsifiers are, in fact, amphiphilic molecules able to 'link' two immiscible phases stabilizing the obtained systems against phase separation. In the present invention Low Molecular Weight Organogelators are not used for their emulsifying properties, but for their ability to self-assemble, in certain conditions, creating three-dimensional structures as already discussed; these network structures can be further fortified and controlled by adding hardstocks to the oil phase. An example of molecules that can be used as Low Molecular Weight Organogelators are monoglycerides of fatty acids or fatty alcohols like policosanol.

### Technical Problem

The production of spreadable oils is a very challenging innovation for food industries. Margarines or shortenings commonly produced as a vegetable-based butter substituent, are commonly made by hydrogenation catalytic processes of the carbon chain naturally present in liquid oils. In fact, if a fat is liquid at room temperature, it is mainly composed of a majority of unsaturated fatty acids (mostly in the *cis* form) [Ghotra et al., 2002] for which a worst molecular interaction and packing are allowed, because of the disordered structure. Thus, the high consistency of margarine is obtained with fully saturated triglycerides (TAGs) that allow a better molecular interaction and, as a consequence, a better packing, giving a more ordered structure. The traditional process employed to saturate the TAGs is hydrogenation, which also can produce positional and geometrical isomers, *trans* fatty acids (TFAs), dangerous for consumers' health; in fact, it is well known the potential responsibility of TFAs in increasing the risk of coronary heart disease [de Cindio and Lupi, 2011]. For instance, Denmark, in 2003, established a limit of 2% by weight of TFAs in fats and oils destined for human consumption, and afterwards other counties have been changing their legislation to limit TFAs consumption [Marangoni, 2009].

Alternative processes proposed to avoid the production of *trans* isomers reducing, in the meantime, the total amount of saturated fatty acids, are interesterification of vegetable oils and saturated fats, that is the exchange of fatty acids among molecules of saturated triglycerides and mono and/or polyunsaturated fats from *trans-free* sources [Criado et al., 2007], or the addition of hard fats in the liquid oil phase with a suitable emulsifier and stabilizer, as suggested in his patent by Jahaniaval (2005), in order to increase the hardness of the final fat.

Despite the above cited methods, one of the most promising techniques used to deeply modify the rheological characteristics of fats, is the organogelation promotion. Organogels are semisolid structured oil-based gels, produced thanks to the action of amphiphilic molecules (in the case of Low Molecular Weight Organogels) able to self-assemble building a tridimensional network in which water droplets or other constituents can be entrapped. A very little amount of Low Molecular Weight Organogelator (about 2-5% by weight) is sufficient to guarantee the formation of a network characterized by high consistency and structuration [Lupi et al., 2012ab]. In particular, the majority of Low Molecular Weight Organogelator molecules are usually used in food industry as emulsifiers, thanks to their amphiphilic nature able to link two phases (one polar and the other one nonpolar), but just in the last few years their potentiality as gelators has been studied and developed.

### Technical Solution

The solution proposed in the present invention is based on the physical modification of the oil phase instead of the traditional chemical ones based either on hydrogenation or interesterification. The present invention aims at yielding new emulsified products, like margarines, based on vegetable oils structured through the addition (in limited amount) of organogelator molecules able to self-assemble building a three-dimensional network.

Even though the exact gelation mechanism is not yet completely understood, it is known that small amounts of organogelators are able to promote fat crystallization and the further aggregation of fat crystals in clusters until a crystal network, entrapping the remaining liquid phase (and water droplets in the case of water-in-oil emulsions production), is built. The network properties and, therefore, the consistency depends on the nature and amount of both organogelator and oil phase. The structured oil phase can, therefore, be used, as dispersing phase, in production of commercial emulsified fats made of water-in-oil emulsions.

According to the present invention, some typical formulations are proposed for the production of these emulsified systems. Moreover a novel process under nitrogen atmosphere is proposed to reduce oxidative phenomena that could occur in the oil phase (leading to rancidity), mainly at high temperature.

The present invention, therefore, aims at producing emulsified novel systems through a novel production process able to overcome the limits of the current solutions and to yield the technical results previously discussed.

Further, aims of the present invention is to obtain the emulsified products with reduced costs and through a simple, safe and reliable process.

The present invention aims, firstly, at producing emulsified spreadable vegetable oils made of a vegetable oil with amount ranging between 71 % and 84% by weight, hard vegetable fats with amount ranging between 2% and 9% by weight, low molecular weight organogelators with amount ranging between 2% and 5% by weight, water or aromatic aqueous phase with amount ranging between 12% and 15% by weight.

Additionally , according to the invention, the ratio between hard fats and vegetable oils ranges between 0.03 and 0.19 and it is preferably equal to 0.12.

Additionally , according to the invention, the vegetable oil is preferably chosen among olive oil, sunflower oil, palm oil, rapeseed oil, corn oil, peanut oil or their mixtures; the hard vegetable fat is cocoa butter and the organogelator is made of mono-glycerides of fatty acids or fatty alcohols like policosanol.

The present invention aims, secondly, at setting a process for production of emulsified spreadable vegetable oils involving the following steps:
1- Mixing of vegetable oil, in the range of 71% to 84% by weight, hard vegetable fats, in the range of 2% to 9% by weight, organogelators, in the range of 2% to 5% by weight, at a temperature ranging between 70°C and 80°C, in inert atmosphere and in the dark;
2- Fast cooling (quenching), under mixing conditions, of the oil phase obtained in the previous step down to 13 ± 2°C yielding the oil phase crystallization;
3- Emulsification of the crystalline oil phase with water, in the range of 12% and 15% by weight, at a temperature ranging between 13°C and 25°C.

Preferably, according to the invention, before the emulsification with the crystalline oil phase, the water is mixed with process additives, aroma and/or stabilizers, at temperature in the range of 70°C to 80°C and the mixing with the crystalline oil phase is carried out in inert conditions for at least 15 minutes.

Additionally, according to the invention, the fast cooling step (quenching) is carried out with a cooling rate of, at least, 1°C/min and preferably greater than 5°C/min.

Preferably, according to the invention, the emulsification step is performed in the most suitable way to obtain dispersed phase droplet with a mean diameter of 5 to 10 m m.

Preferably, according to the invention, following the emulsification step, the emulsified systems are allowed to rest for, at least, 24 hours at low temperature (preferably 7 days) at, approximately, 4°C.

The invention will be further described by some non-limiting examples:

Example 1 Formulations of the emulsified system made of vegetable oil.

The vegetable oil based emulsion, according to the invention, comprises the ingredients and the amount ranges shown in table 1
**Table 1**

**[Table 1]**

| Ingredient | Potential specific ingredients | Relative amount % [w/w%] |
|---|---|---|
| Vegetable oil | Olive oil, sunflower oil, palm oil, rapeseed oil, corn oil, peanut oil and other vegetable oils or their mixtures | 71:84 |
| Hard vegetable fats | Cocoa butter | 2:9 |
| Organogelator | Monoglycerides of fatty acids | 2:5 |
| Water | Aromatic water solutions | 12:15 |

It is quite evident that the vegetable oil amount is significantly larger than that present in commercial product obtained with current procedures having similar mechanical properties and for similar applications whereas the hard fats component is significantly lower than the values commonly used in similar products available in the market or described in both open literature and patents.

Some examples of formulation are given in table 2
**Table 2**

**[Table 2]**

| Ingredient | Sample 1 [w/w %] | Sample 2 [w/w %] | Sample 3 [w/w %] |
|---|---|---|---|
| Vegetable oil | 74.2 | 71.7 | 75 |
| Hard vegetable fats | 8.9 | 8.6 | 9 |
| Organogelator | 4.7 | 4.7 | 2 |
| Water | 12.2 | 15 | 14 |

Samples 2 and 3 shown in table 2 were prepared by changing the composition of sample 1, assumed as a reference. Sample 2 is characterized by a larger amount of water with respect to sample 1 obtained by keeping a constant ratio between the hard fats (cocoa butter) and the vegetable oil and equal to 0.12. The same ratio cocoa butter/ oil was kept in sample 3 where the total amount of organogelator was decreased.

The consistency of sample 1, close to that of commercial margarines, decreases with increasing water content (sample 2); the same result, i.e. a decrease in consistency, is obtained by decreasing the organogelator fraction. Moreover the first two samples exhibit similar structuring degrees whereas the sample obtained with the lowest amount of organogelator (sample 3) is, also, less structured and more 'spreadable' than the other two samples are. In addition, the increase in the total oily phase and, simultaneously, the increase in hard solid fats (up to 9% by weight) yields an increase in sample consistency and delays the consolidation of the crystalline network until one week after the preparation: this implies that rheological properties of such samples will be considered constant, and therefore the samples will be stable, at least one week after the preparation.

### Advantageous Effects

Hard fats are commonly used in many industrial applications owing to their ability to give consistency and texture to many foods such as creams, dairy desserts, ice creams, baking goods, puff pastry etc. Industrial applications are mainly based on saturated and/or hydrogenated fats, known to be unhealthy and potential causes of cardiovascular diseases and/or high blood cholesterol levels [Marangoni, 2009]. This invention is proposing the production of healthy spreadable vegetable oils based on the physical modification of liquid vegetable oils rich in unsaturated components and, therefore, healthier than the traditional hard fats.

The W/O emulsions obtained according to this invention will have rheological properties similar to the traditional products, avoiding therefore expensive changes in the current industrial processing lines based on hard fats, on the other hand their healthy components will improve the customer satisfaction and therefore will increase the acceptability of many products currently considered dangerous for human health.

This will result, in turn, in the increase of the added value of oil products and in the greater development of some side-products (such as the virgin olive oil with respect to the extra-virgin olive oil). Moreover novel applications of these oil products could be obtained such as:
- Semi-finished products like emulsions for confectionery to be used as butter and margarine replacers in pastry and puff pastry production;
- Finished products in innovative packing for catering services (canteens, hotels, schools, etc.)
- Finished products containing nutraceutical components or particular aroma for novel applications in food, cosmetic or pharmaceutical fields.

### Best Mode for Invention

According to the present invention the composition of the water-in-oil emulsion should be comprised between the following ranges (weight percentages)
Vegetable Oil 71-84%
Aqueous Phase 12-15%
Low Molecular Weight Organogelator 2-5%
Hardstock 2-9%

The best composition and ingredients to ensure rheological properties similar to margarines or butter, is defined in Example 2 where Sample 4 production is described.

### Sample 4

### Fat Phase

Olive Oil 74%
Cocoa Butter 9%
Monoglycerides of fatty acids 5%

### Aqueous phase

Water 12%

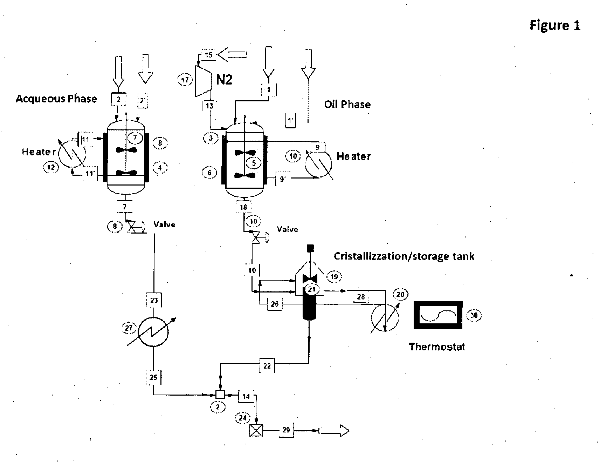

Figure 1 shows the production process of emulsions, starting from the separate preparation of an aqueous phase and a fat phase. The 'aqueous phase' is mainly composed of water and all additives soluble in water (flavoring agents, stabilizers and so on), if requested. The 'oil phase' is mainly made of vegetable oils liquid at room temperature, the Low Molecular Weight Organogelator (which promote the production of organogels), and hard fats used as rheological controllers. In Sample 4, the Fat Phase ingredients are Olive Oil, Cocoa butter and Monoglycerides of fatty acids.

In Figure 1, the stream containing oil, main constituent of the fat phase, and the stream containing the aqueous phase are respectively named as stream 1 and stream 2. Streams 1' and 2' contain the additives of fat and aqueous phase respectively. Streams 1 and 1' from one side, and streams 2 and 2' from the other side are therefore mixed into the preparation vessels of each phase (tank 4 for the aqueous phase and tank 3 for the fat phase). The two phases have to be warmed up to a temperature between 70°C and 80°C. Thus, each tank is equipped with a overhead stirrer and a heating jacket, respectively stirrer 5 and jacket 6 for tank 3, and stirrer 7 and jacket 8 of tank 4. Each heating jacket is connected to a heating circuit, in which a heating fluid flows; it includes a heat exchanger for warming the fluid. In particular, it is shown a heating circuit mainly composed of a heat exchanger 10, of the heating fluid serving tank3 of the fat phase (streams 9' and 9 indicate the utility fluid entering the heat exchanger 10), and a heating circuit serving tank 4, consisting of the heat exchanger 12 (fed with streams 11' and 11).

It is well known that oxidative phenomena can occur while heating vegetable oils, wasting and lowering their organoleptic properties [Pristouri et al., 2010] and causing rancidity; this can lead to the formation of bad flavors and unpleasant taste of the product. Therefore, the storage of oils at high temperature can produce rancidity phenomena; as an example, in the case of olive oil it is strictly recommended to guarantee a storage temperature below 35°C [Pristouri et al., 2010, Boselli at al., 2009]. Aiming at reducing as much as possible rancidity, tank 3 should be realized in stainless steel and jacketed, in order to guarantee a temperature control during the fat phase mixing, and also a protection against oxygen and light radiation should be ensured. The vessel head is therefore saturated with an inert gas (N₂) at a pressure value equal to or higher than 1 atm, able to inhibit fats oxidation. As an example, a technical scheme of tank 3 is proposed in Figure 2, where the inlet of stream 13 of nitrogen is evidenced. Additionally, Figure 2 shows inlet 9 and outlet 9' of the heating fluid in heating jacket 6 of oil phase mixing tank 3, motor 16 of stirrer 5 of tank 3, inlet fittings of oil 1 and of additives 1'.

Referring again to Figure 1, nitrogen inlet in oil phase mixing tank 3 is controlled by compressor 17.

After a residence time of 15 minutes in mixing tank 3, the oil phase is withdrawn through the line 18 and immediately fast cooled (quenching) in a crystallization/ storage tank 19 placed under the oil phase mixing tank 3 and properly thermostated with a heat exchanger controlled by a thermostat 30. This allows the final cooling ramp (the inlet and outlet stream of the utility fluid in heat exchanger 20 linked to the thermostat 30 are 28 and 26, respectively) to be modified, until the obtained organogel is uniformly (flat temperature profiles) at the temperature of 13 ± 2.

As an example, to guarantee the semi-continuous production of 2L of organogel, the tank diameter should be 50cm.

The cooling rate depends on desired consistency level in the final product and it increases with increasing the wanted consistency. If products having high consistency, such as that of commercial margarines, are wanted, the oil phase has to be cooled with a fast temperature ramp, larger than 5°C/min. Aiming at making uniform the temperature in the whole sample and at promoting the crystal nucleation of the complex LMWO/hard vegetable fats, the oily phase will have to be slowly stirred, by means of stirrer 21, during the cooling process in crystallization/storage tank 19.

Once obtained the desired temperature, the oil phase can be emulsified with the water phase, previously cooled down to a temperature ranging between 13°c and 25°C, by means of the heat exchanger 27, aiming at producing water-in-oil emulsions (W/O).

Starting from this point the process is semi-continuous: the crystallized oil phase will have to be taken from the crystallization/storage tank 19 and, through the line 22, sent to the emulsification step.

The cooled water phase, coming from the mixing tank 4 through the duct 25, is added to the oil phase coming from the crystallization/storage tank 19 through the duct 22. Both phases come, therefore, to the emulsifier 24.

According to Ambrosone et al. (2006), the presence of a dispersed water phase significantly decreases the risk of rancidity of the emulsion in cold conditions. The emulsions are, therefore, stable against the rancidity phenomena.

If it is desired to tune the final texture of the oil phase, making it less consistent, it is possible to modify at least one of the following parameters:
- The cooling ramp in the storage tank that will have to be slow (approximately 1°C/min);
- The mixing of the oil phase during the cooling step that will have to be stronger;
- The system composition (change in the fraction of organogelator, cocoa butter and water);

The emulsification is carried out by using systems able to yield the desired drop size distribution (mean drop diameter of dispersed phase approximately equal to 5-10 m m) and to give stable and semi-solid (solid-like) emulsions. As non-exhaustive example such systems can be based on rotor-stator devices or can be high pressure emulsifiers.

If rotor-stator systems are used and for any level of final consistency of the emulsion the mixing speed will have to be low and the mixing time will have to be short.

The obtained emulsion 29 will be able to be used for the different aims for which it was designed at least 24 hours after the preparation to allow the complete formation of the crystalline network. This conservation time was determined by using rheological tests which have shown that 24 hours is the minimum waiting time necessary to obtain a stable crystalline network. Moreover, to promote the complete fat crystallization process, emulsion 29 will have to be stored at low temperature (4°C).

The obtained emulsified product can be either used, as it is, as a spreadable vegetable oil after a proper packaging step, or can be processed with cereal dough to produce baking goods (calendering in alternate layers for puffy pastry, direct mixing for biscuits, cream puffs, or pastry production) [de Cindio and Lupi,2011].

The most important advantage, as far as the process is concerned, consists in obtaining a semi-continuous plant for the production of spreadable vegetable oil under nitrogen atmosphere which allows to reduce the chances of fatty acids rancidity in vegetable oils in which it is necessary (olive oil, for example, is liable to these phenomena).

The process could be changed from semi-continuous to continuous by using a product line of the crystallized oil phase provided with a screw pump able to allow a controlled cooling of the oil phase and the direct feed to the emulsification system.

This invention has been described as an example, even if non limiting, according to the best mode of realization, nevertheless it has to be considered that changes can be done by the experts in the field without going outside from the relative scope of protection as defined in the enclosed claims.

### Industrial Applicability

The production of spreadable vegetable oils according to the present invention is a significant innovation for agro-food companies working in different areas. So far the hard fats commonly adopted by the industry are based on natural saturated fats or on hydrogenated systems obtained by catalytic hydrogenation of unsaturated oils. The latter products are characterized by the potential presence of trans-fatty acids which are dangerous for human health. On the other hand the present invention is proposing a hard fat based on a physical modification of unsaturated oils able to give healthy solid fats rich in unsaturated fractions and free from trans fatty acids. The product will have rheological properties similar to those of the traditional fats therefore no change in the industrial processes should be necessary for it adoption at industrial level.

As a consequence the product described in the present invention (i.e. the spreadable vegetable oil) could be widely used in the industry as a healthier replacer of the traditional margarines and shortenings in the traditional areas of applications such as: production of ice creams, dairy desserts, pastry and puff pastry, baking goods, etc.

Additionally the ability to tune the rheological properties of the spreadable vegetable oil through suitable changes in the formulation and/or in the process conditions would allow the introduction of novel products having specific mechanical characteristics designed for specific applications. Finally the presence of healthy oils, rich in unsaturated components, could open new industrial productions in different areas such the production of 'nutraceutical fats' or emulsions for cosmetic or pharmaceutical applications.

The spreadable vegetable oil could be industrially obtained by adopting at the proper scale the process described in the present invention, by choosing the operating conditions, following the suggestions given in the present invention, to obtain the desired rheological properties.

### References

Ambrosone L., Mosca M., Ceglie A., (2006). Oxidation of water emulsified olive oils, Food Hydrocolloids 20, 1080-1086
Boselli E., Di Lecce G., Strabbioli R., Pieralisi G., Frega N.G., (2009). Are virgin olive oils obtained below 27°C better than those produced at higher temperatures?, LWT - Food Science and Technology 42, 748-757
Bruin, S., (1993). Food Product Containing Oil-Soluble Vitamins, Digestible Fat and Indigestible Polyol Fatty Acid Polyesters. US Patent US 5,248,509
Coupland, J.N., 2002. Crystallization in emulsions. Current Opinion in Colloid and Interface Science 7, 445-450.
Criado, M., Hernández-Martín, E. , López-Hernández, A., Otero, C. (2007). Enzymatic interesterification of extra virgin olive oil with a fully hydrogenated fat: characterization of the reaction and its products , Journal of American Oil Chemists Society 84 , 717 - 26.
de Cindio B., Lupi F. R., (2011), Part 2, Chap. 15 - 'Saturated fat reduction in pastry' in Talbot G., 'Reducing saturated fats in foods', Woodhead Publishing Limited (Great Abington, Cambridge, UK), pp. 301-317
Gabriele, D., Migliori, M., Di Sanzo, R., Oliviero Rossi, C., Ruffolo, S.A., de Cindio, B., (2009). Characterisation of dairy emulsions by NMR and rheological techniques. Food Hydrocolloids 23, 619-628
Ghotra, B. S. , Dyal, S. D. , Narine, S. S. (2002). Lipid shortenings: a review, Food Research International 35 , 1015 - 1048
Harte J. B., (2003). Pastry Products/Types and Production, in 'Caballero B., Trugo L., Finglas P., Encyclopaedia Of Food Science And Nutrition', Academic Press, Amsterdam, pp. 4407 - 12
Jahaniaval, F. (2005). Process for preparing high liquid oil, no trans, very low saturates, regular margarine with phospholipids , patent US 2005/0233056 A1, international classification A23D007/00
Kakuda, Y., Abraham, V., and Jahan-aval, F., (2000) Process for preparing high liquid oil margarines, International Patent WO 01/80659 A2
Leal-Calderon, F., Thivilliers, F., Schmitt, V., (2007). Structured emulsions. Current Opinion in Colloid and Interface Science 12, 206-212
Lupi, F.R., Gabriele, D., Facciolo, D., Baldino, N., Seta, L., De Cindio, B. (2012a). Effect of organogelator and fat source on rheological properties of olive oil-based organogels, Food Research International, 46, 177-184
Lupi, F. R., Gabriele, D., & de Cindio, B. (2012b). Effect of shear rate on crystallisation phenomena in olive oil based organogels. Food and Bioprocess Technology, DOI 10.1007/s11947-011-0619-2
Maguire, J. (1995). An edible Fat Blend, UK patent Application, GB 2 28 304 A
Marangoni, A.G., (2009). Novel strategies for nanostructuring liquid oils into functional fats. In: Proceedings of the Fifth International Symposium on Food Rheology and Structure, Zurich, CH
Ojijo, N. K. O., Neeman, I., Eger, S., & Shimoni, E. (2004). Effects of mono-glyceride content, cooling rate and shear on the rheological properties of olive oil/ monoglyceride gel networks. Journal of the Science of Food and Agriculture, 84, 1585-1593
Pal, R., (1998). A novel method to correlate emulsion viscosity data. Colloids and Surfaces A: Physicochemical and Engineering Aspects 137, 275-286
Pernetti, M., van Malssen, K.F., Flöter, E., Bot, A., (2007). Structuring of edible oils by alternatives to crystalline fat. Current opinion in Colloid and Interface Science 12, 221-231
Pristouri G., Badeka A., Kontominas M.G., (2010). Effect of packaging material headspace, oxygen and light transmission, temperature and storage time on quality characteristics of extra virgin olive oil, Food Control 21, 412-418
Rasmussen, C., O., (1993). Process for producing a solid water-in-oil emulsion and apparatus for carrying out the process. International Patent WO 93/10665
Reddy, P.R., Madsen R.A., Schuurman J. H., (2001)., Water in oil stock products, US Patent US 6,322,842
Rodríguez-Abreu, C., Lazzari, M., (2008). Emulsions with structured continuous phases. Current Opinion in Colloid and Interface Science 13, 198-205.
Salas, J.J., Bootello, M.A., Martínez-Force, E., Garcés, R., (2011). Production of stearate rich butters by solvent fractionation of high stearic-high oleic sunflower oil. Food Chemistry 124, 450-458
Shapiro, Y.E., (2011). Structure and dynamics of hydrogels and organogels: An NMR spectroscopy approach, Progress in Polymer Science 36, 1184- 1253
Zetzl, A.K., Marangoni, A.G., Barbut, S., (2012). Mechanical properties of ethylcellulose oleogels and their potential for saturated fat reduction in frankfurters. Food and Function 3, 327-337

## Claims

1. A process to produce emulsified spreadable vegetable products **characterized in that** it comprise the following steps:
- Mixing of vegetable oil, in the range of 71% to 84% by weight, hard vegetable fats, in the range of 2% to 9% by weight, organogelators, in the range of 2% to 5% by weight, at a temperature ranging between 70°C and 80°C, in inert atmosphere and in the dark;
- Fast cooling (quenching), under mixing conditions, of the oil phase obtained in the previous step down to 13±°C yielding the oil phase crystallization;
- Emulsification of the crystalline oil phase with water, in the range of 12% and 15% by weight, at temperature ranging between 13°C and 25°C.

2. A process to produce emulsified spreadable vegetable products as claimed in Claim 2 **characterized in that** before the emulsification with the crystalline oil phase, the water is mixed with process additives, aroma and/or stabilizers, at temperature in the range of 70°C to 80°C.

3. A process to produce emulsified spreadable vegetable products as claimed in Claim 2 or 3 **characterized in that** the mixing with the crystalline oil phase Is carried out in inert conditions for at least 15 minutes.

4. A process to produce emulsified spreadable vegetable products as claimed in any preceding Claims **characterized in that** the fast cooling step (quenching) of the oil phase is carried out with a cooling rate of, at least, 1°C/min

5. A process to produce emulsified spreadable vegetable products as claimed in Claim 4 **characterized in that** the fast cooling step (quenching) of the oil phase is carried out with a cooling rate greater than 5°C/min

6. A process to produce emulsified spreadable vegetable products as claimed in Claims 1-5 **characterized In that** the emulsification step is performed in the most suitable way to obtain dispersed phase droplet with a mean diameter of approximately 5 to 10 µm.

7. A process to produce emulsified spreadable vegetable products as claimed in Claims 1-6 **characterized in that** following the emulsification step of the crystallized oil phase, the emulsified systems are allowed to rest for, at least, 24 hours at low temperature.

8. A process to produce emulsified spreadable vegetable products as claimed in Claim 7 **characterized In that** following the emulsification step of the crystallized oil phase, the emulsified systems are allowed to rest at a temperature approximately equal to 4°C.

9. An emulsified spreadable vegetable product obtainable by a process according to one or more of claims 1 to 8 **characterized in that** it comprises vegetable oils in the range of 71% to 84% by weight, hard vegetable fats in the range of 2% to 9%, low molecular weight organogelators In the range of 2% to 5%, water or aromatic water solution in the range of 12% to 15%.

10. Emulsified spreadable vegetable products as claimed in Claim 9 **characterized in that** the ratio between hard vegetable fats and vegetable oils ranges from 0.03 and 0.19.

11. Emulsified spreadable vegetable products as claimed in Claims 9-10 **characterized in that** the ratio between hard vegetable fats and vegetable oils is 0.12.

12. Emulsified spreadable vegetable products as claimed in Claim 11 **characterized in that** the vegetable oil is selected from any of the following oils or their mixture: olive oil, sunflower oil, palm oil, rapeseed oil, corn oil, peanut oil.

13. Emulsified spreadable vegetable products as claimed in Claim 12 **characterized in that** the hard vegetable fat Is cocoa butter.

## Patentansprüche

1. Verfahren zur Erzeugung emulgierter streichfähiger Pflanzenprodukte, **dadurch gekennzeichnet, dass** es die folgenden Schritte umfasst:
- Mischen von Pflanzenöl, im Bereich von 71 bis 84 Gewichtsprozent, harten Pflanzenfetten, im Bereich von 2 bis 9 Gewichtsprozent, Organogelatoren, im Bereich von 2 bis 5 Gewichtsprozent, bei einem Temperaturbereich von 70°C bis 80°C in einer inerten Atmosphäre und im Dunklen;
- schnelles Abkühlen (Abschrecken), unter Mischbedingungen, der in dem vorangehenden Schritt erhaltenen Ölphase auf 13±2°C, was die Ölphasenkristallisation erbringt;
- Emulgieren der kristallinen Ölphase mit Wasser, im Bereich von 12 bis 15 Gewichtsprozent, bei einem Temperaturbereich von 13°C bis 25°C.

2. Verfahren zur Erzeugung emulgierter streichfähiger Pflanzenprodukte gemäß Anspruch 2, **dadurch gekennzeichnet, dass** vor dem Emulgieren mit der kristallinen Ölphase das Wasser mit Prozesszusatzstoffen, Aroma und/oder Stabilisatoren bei einem Temperaturbereich von 70°C bis 80°C vermischt wird.

3. Verfahren zur Erzeugung emulgierter streichfähiger Pflanzenprodukte gemäß Anspruch 2 oder 3, **dadurch gekennzeichnet, dass** das Mischen mit der kristallinen Ölphase unter inerten Bedingungen für mindestens 15 Minuten ausgeführt wird.

4. Verfahren zur Erzeugung emulgierter streichfähiger Pflanzenprodukte gemäß einem der vorangehenden Ansprüche, **dadurch gekennzeichnet, dass** der Schritt des schnellen Abkühlens (Abschrecken) der Ölphase bei einer Kühlrate von mindestens 1 °C/min ausgeführt wird.

5. Verfahren zur Erzeugung emulgierter streichfähiger Pflanzenprodukte gemäß Anspruch 4, **dadurch gekennzeichnet, dass** der Schritt des schnellen Abkühlens (Abschrecken) der Ölphase bei einer Kühlrate von mehr als 5°C/min ausgeführt wird.

6. Verfahren zur Erzeugung emulgierter streichfähiger Pflanzenprodukte gemäß den Ansprüchen 1 - 5, **dadurch gekennzeichnet, dass** der Emulgierschritt in der Weise durchgeführt wird, die am besten geeignet ist, um Dispersphasentropfen mit einem mittleren Durchmesser von ungefähr 5 bis 10 µm zu erhalten.

7. Verfahren zur Erzeugung emulgierter streichfähiger Pflanzenprodukte gemäß den Ansprüchen 1 - 6, **dadurch gekennzeichnet, dass** nach dem Emulgierschritt der kristallinen Ölphase, es den emulgierten Systemen erlaubt wird, für mindestens 24 Stunden bei niedriger Temperatur zu ruhen.

8. Verfahren zur Erzeugung emulgierter streichfähiger Pflanzenprodukte gemäß Anspruch 7, **dadurch gekennzeichnet, dass**, nach dem Emulgierschritt der kristallinen Ölphase, es den emulgierten Systemen erlaubt wird bei einer Temperatur von ungefähr 4°C zu ruhen.

9. Emulgiertes streichfähiges Pflanzenprodukt, das durch ein Verfahren gemäß einem oder mehreren der Ansprüche 1 bis 8 erhältlich ist, **dadurch gekennzeichnet, dass** es umfasst: Pflanzenöle im Bereich von 71 bis 84 Gewichtsprozent, harte Pflanzenfette im Bereich von 2 % bis 9 %, Organogelatoren mit niedrigem Molekulargewicht im Bereich von 2 % bis 5 %, Wasser oder eine aromatische Wasserlösung im Bereich von 12 % bis 15 %.

10. Emulgierte streichfähige Pflanzenprodukte gemäß Anspruch 9, **dadurch gekennzeichnet, dass** das Verhältnis zwischen harten Pflanzenfetten und Pflanzenölen in einem Bereich von 0,03 bis 0,19 liegt.

11. Emulgierte streichfähige Pflanzenprodukte gemäß den Ansprüchen 9 - 10, **dadurch gekennzeichnet, dass** das Verhältnis zwischen harten Pflanzenfetten und Pflanzenölen 0,12 ist.

12. Emulgierte streichfähige Pflanzenprodukte gemäß Anspruch 11, **dadurch gekennzeichnet, dass** das Pflanzenöl eines der folgenden Öle oder eine Mischung dieser Öle ist: Olivenöl, Sonnenblumenöl, Palmöl, Rapsöl, Maisöl, Erdnussöl.

13. Emulgierte streichfähige Pflanzenprodukte gemäß Anspruch 12, **dadurch gekennzeichnet, dass** das harte Pflanzenfett Kakaobutter ist.

## Revendications

1. Procédé de production de produits d'origine végétale émulsifiés à tartiner **caractérisé en ce qu'**il comprend les étapes suivantes :
- mélange d'huile végétale, dans la plage de 71 à 84 % en poids, de graisses végétales dures, dans la plage de 2 à 9 % en poids, d'organogélateurs, dans la plage de 2 à 5 % en poids, à une température comprise entre 70 et 80°C, dans une atmosphère inerte et dans la pénombre ;
- refroidissement rapide (figeage), dans les conditions de mélange, de la phase huile obtenue à l'étape précédente à 13 ± 2°C pour induire la cristallisation de la phase huileuse ;
- émulsification de la phase huileuse cristalline avec de l'eau, dans la plage de 12 à 15 % en poids, à une température comprise entre 13 et 25°C.

2. Procédé de production de produits d'origine végétale émulsifiés à tartiner selon la revendication 2 **caractérisé en ce que**, avant l'émulsification avec la phase huileuse cristalline, l'eau est mélangée à des additifs de procédé, des arômes et/ou des stabilisants, à une température dans la plage de 70 à 80°C.

3. Procédé de production de produits d'origine végétale émulsifiés à tartiner selon la revendication 2 ou 3 **caractérisé en ce que** le mélange avec la phase huileuse cristalline est réalisé dans des conditions inertes pendant au moins 15 minutes.

4. Procédé de production de produits d'origine végétale émulsifiés à tartiner selon l'une quelconque des revendications précédentes **caractérisé en ce que** l'étape de refroidissement rapide (figeage) de la phase huileuse est réalisée à une vitesse de refroidissement d'au moins 1°C/min.

5. Procédé de production de produits d'origine végétale émulsifiés à tartiner selon la revendication 4 **caractérisé en ce que** l'étape de refroidissement rapide (figeage) de la phase huileuse est réalisée à une vitesse de refroidissement supérieure à 5°C/min.

6. Procédé de production de produits d'origine végétale émulsifiés à tartiner selon les revendications 1 à 5 **caractérisé en ce que** l'étape d'émulsification est réalisée de la manière la plus convenable pour obtenir une gouttelette en phase dispersée ayant un diamètre moyen d'environ 5 à 10 µm.

7. Procédé de production de produits d'origine végétale émulsifiés à tartiner selon les revendications 1 à 6 **caractérisé en ce que**, après l'étape d'émulsification de la phase huileuse cristallisée, les systèmes émulsifiés sont laissés au repos pendant, au moins, 24 heures à basse température.

8. Procédé de production de produits d'origine végétale émulsifiés à tartiner selon la revendication 7 **caractérisé en ce que**, après l'étape d'émulsification de la phase huileuse cristallisée, les systèmes émulsifiés sont laissés au repos à une température approximativement égale à 4°C.

9. Produit d'origine végétale émulsifié à tartiner pouvant être obtenu par un procédé selon une ou plusieurs des revendications 1 à 8 **caractérisé en ce qu'**il comprend des huiles végétales dans la plage de 71 à 84 % en poids, des graisses végétales dures dans la plage de 2 à 9 %, des organogélateurs de bas poids moléculaire dans la plage de 2 à 5 %, de l'eau ou une solution aqueuse aromatique dans la plage de 12 à 15 %.

10. Produits d'origine végétale émulsifiés à tartiner selon la revendication 9 **caractérisés en ce que** le rapport entre les graisses végétales dures et les huiles végétales est dans la plage de 0,03 à 0,19.

11. Produits d'origine végétale émulsifiés à tartiner selon les revendications 9-10 **caractérisés en ce que** le rapport entre les graisses végétales dures et les huiles végétales est de 0,12.

12. Produits d'origine végétale émulsifiés à tartiner selon la revendication 11 **caractérisés en ce que** l'huile végétale est choisie parmi l'une quelconque des huiles suivantes ou leur mélange : huile d'olive, huile de tournesol, huile de palme, huile de colza, huile de maïs, huile d'arachide.

13. Produits d'origine végétale émulsifiés à tartiner selon la revendication 12 **caractérisés en ce que** la graisse végétale dure est le beurre de cacao.
